# EUROPÄISCHE PATENTANMELDUNG

(11) **EP 1 892 432 A2**
(43) Veröffentlichungstag der Anmeldung: **27.02.2008**
(21) Anmeldenummer: 07015852.2
(22) Anmeldetag: 11.08.2007
(51) Int. Cl.: F16D 13/71

(54) **Kupplungsvorrichtung, insbesondere Kraftfahrzeugkupplungsvorrichtung**

(30) Priorität: 25.08.2006 DE 102006039998; 01.08.2007 DE 102007036115
(71) Anmelder: ZF Friedrichshafen AG, 88038 Friedrichshafen (DE)
(72) Erfinder: Ament, Norbert, 97714 Eltingshausen (DE)

(57) **Zusammenfassung**

Die Erfindung betrifft eine Kupplungsvorrichtung (1), insbesondere eine Kraftfahrzeugkupplungsvorrichtung, die ein Kupplungsgehäuse (2) aufweist, das mit einem Schwungrad (3) einer Brennkraftmaschine verbunden ist und mit diesem um eine Drehachse (4) rotieren kann, sowie eine im Kupplungsgehäuse (2) drehfest, jedoch axial verschiebbar angeordnete Anpressplatte (5) und eine zwischen dem Schwungrad (3) und der Anpressplatte (5) angeordnete und mit mindestens einem Reibbelag (6) versehene Kupplungsscheibe (7). Um ein verbessertes Trennen der Kupplung zu erreichen, ist erfindungsgemäß vorgesehen, dass die Kupplungsscheibe (7) zur strömungsbedingten Erzeugung einer Kraft in axiale Richtung (a) mindestens eine Leitschaufel (8) aufweist, die sich aus der Ebene (9) der Kupplungsscheibe (7) heraus in axiale Richtung (a) erstreckt, wobei die Leitschaufel (8) mindestens einen Abschnitt aufweist, der unter einem Winkel (α) zur Ebene (9) der Kupplungsscheibe (7) angeordnet ist.

## Beschreibung

Die Erfindung betrifft eine Kupplungsvorrichtung, insbesondere eine Kraftfahrzeugkupplungsvorrichtung, die ein Kupplungsgehäuse aufweist, das mit einem Schwungrad einer Brennkraftmaschine verbunden ist und mit diesem um eine Drehachse rotieren kann, sowie eine im Kupplungsgehäuse drehfest, jedoch axial verschiebbar angeordnete Anpressplatte und eine zwischen dem Schwungrad und der Anpressplatte angeordnete und mit mindestens einem Reibbelag versehene Kupplungsscheibe.

Eine solche Kupplungsvorrichtung ist beispielsweise in der DE 195 47 559 C2 beschrieben. Um eine reibschlüssige Kopplung zwischen der Kupplungsscheibe einerseits und dem Schwungrad samt Anpressplatte andererseits herstellen zu können, ist die Anpressplatte mittels einer Membranfeder mit einer Axialkraft beaufschlagbar. Im eingerückten Zustand presst die Membranfeder die Anpressplatte gegen das Schwungrad, während im ausgerückten Zustand die axiale Anpresskraft der Membranfeder weggenommen werden kann. Hierzu weist das radial innenliegende Ende der Membranfeder eine Anzahl Federzungen auf, die mit einem Ausrücker verbunden sind, mit dem die Federzungen in Achsrichtung bewegt werden können.

Es ist bekannt, die Strömungsverhältnisse im Inneren der Kupplungsvorrichtung zu beeinflussen, um für den Betrieb der Vorrichtung günstige Bedingungen zu erreichen. Es ist bekannt geworden, die Anpressplatte in ihrem rückwärtigen Bereich mit flügelartigen Elementen zu versehen, um einen Ventilationseffekt zu erzeugen. Allerdings hat sich dabei in nachteiliger Weise herausgestellt, dass hierdurch die Steifigkeit der Anpressplatte herabgesetzt wird. Auch ist es bekannt, derartige Elemente zur Erzeugung eines Ventilationsluftstroms am Kupplungsgehäuse vorzusehen. Der hiermit erzeugbare Effekt hat sich jedoch als nicht sehr effektiv erwiesen.

Ein bekanntes Problem bei gattungsgemäßen Kupplungsvorrichtungen ist, dass sich beim Auskuppeln, d. h. wenn die Anpressplatte von den Reibbelägen abhebt, die Kupplungsscheibe nicht schnell genug in Richtung der Anpressplatte mitbewegt, was Voraussetzung dafür ist, dass ein schnelles Trennen der Kupplung erfolgt. Dies wird angestrebt, um eine möglichst unverzügliche Unterbrechung der Drehmomentübertragung zu gewährleisten. Bekannt ist der negative Effekt, dass die Kupplungsscheibe zunächst noch an der Reibfläche des Schwungrades anhaftet, so dass es zu einem "Rupfen" der Kupplung kommt.

Um die genannten Probleme zu vermindern, ist es bekannt, hierfür in die Reibbeläge eingebrachte Nuten einzusetzen. Auch sind gefettete bzw. beschichtete Nabenverbindungen bekannt geworden, die das Problem abschwächen sollen. Es wurde auch versucht, eine besser aufeinander abgestimmte Auslegung des Abhubs der Druckplatte und der Belagfederung der Kupplungsscheibe vorzusehen. Allerdings ist der Erfolg dieser Maßnahmen teilweise unbefriedigend.

Der Erfindung liegt daher die **Aufgabe** zugrunde, eine Kupplungseinrichtung der eingangs genannten Art so weiterzubilden, dass dieser negative Effekt vermindert bzw. vermieden wird. Es soll also dafür Sorge getragen werden, dass beim Auskuppeln, d. h. beim axialen Abheben der Anpressplatte von der Kupplungsscheibe, ein unverzügliches axiales Trennen der Kupplungsscheibe vom Schwungrad erfolgt. Hierdurch soll ein "Rupfen" der Kupplung vermieden werden.

Die **Lösung** dieser Aufgabe durch die Erfindung ist dadurch gekennzeichnet, dass die Kupplungsscheibe zur strömungsbedingten Erzeugung einer Kraft in axiale Richtung mindestens eine Leitschaufel aufweist, die sich aus der Ebene der Kupplungsscheibe heraus in axiale Richtung erstreckt, wobei die Leitschaufel mindestens einen Abschnitt aufweist, der unter einem Winkel zur Ebene der Kupplungsscheibe angeordnet ist.

Vorzugsweise ist vorgesehen, dass der Schnitt der Leitschaufel mit einer parallel zur Ebene der Kupplungsscheibe verlaufenden Ebene eine Linie bildet, die zumindest teilweise, vorzugsweise vollständig in radiale Richtung der Kupplungsscheibe oder in eine zur radialen Richtung parallele Richtung weist.

Eine spezielle Ausgestaltung sieht vor, dass die Kupplungsscheibe zur strömungsbedingten Erzeugung einer Kraft in axiale Richtung mindestens eine Luftleitschaufel aufweist, die sich aus der Ebene der Kupplungsscheibe heraus in axiale Richtung erstreckt, wobei das von der Kupplungsscheibe axial am weitesten entfernte Ende der Luftleitschaufel eine Kante oder eine Linie bildet, die, in axiale Richtung betrachtet, in radiale Richtung der Kupplungsscheibe oder in eine zur radialen Richtung parallele Richtung weist.

Erfindungsgemäß ist also vorgesehen, dass die Kupplungsscheibe vorzugsweise mit einer Anzahl Leitschaufeln versehen wird, die bei Rotation der Kupplungsscheibe infolge der Fluidumleitung an den Leitschaufeln eine axiale Kraftkomponente erzeugen, die beim axialen Verschieben der Anpressplatte die Kupplungsscheibe vom Schwungrad weg bewegt und somit ein schnelleres Trennen der Kupplung erfolgt.

Es wird im Weiteren von Luftleitschaufeln gesprochen, wenngleich grundsätzlich auch andere Fluide als Luft die Kupplung umgeben können; insoweit ist erfindungsgemäß generell eine Leitschaufel gemeint.

Über den Umfang der Kupplungsscheibe sind vorzugsweise mindestens zwei, besonders bevorzugt jedoch mehrere Luftleitschaufeln angeordnet, wobei diese bevorzugt äquidistant über den Umfang verteilt angeordnet sind.

Die mindestens eine Luftleitschaufel kann in axiale Richtung auf das Schwungrad zu gerichtet sein. Hierdurch wird der genannte Effekt erzielt, d. h. die Kupplungsscheibe wird infolge der Luftströmung vom Schwungrad weg bewegt.

Es ist jedoch gemäß einer alternativen Ausführungsform auch denkbar, dass die Luftleitschaufeln in axiale Richtung auf die Anpressplatte zu gerichtet sind. In diesem Falle kann im geschlossenen Zustand der Kupplungsvorrichtung eine Anpresskraftbeeinflussung erfolgen, so dass die Anpresskraft - über die Beaufschlagung mit der Anpressplatte hinaus - erhöht wird. Diese Variante kommt dann in Betracht, wenn das Trennverhalten der Kupplungsvorrichtung ausreichend ist, z. B. das Trennen der Kupplung über anderweitige Maßnahmen sichergestellt ist. Hiermit ist gegebenenfalls eine Beeinflussung der Ausrückkraft bzw. eine Beeinflussung der bislang starken Abhängigkeit des Verhältnisses der Anpresskraft zur Ausrückkraft möglich. Die axiale Richtung der Luftleitschaufeln ist abhängig von der gewünschten wirksamen axialen Kraftrichtung, die erzeugt werden soll und der entsprechenden baulichen Anbindung.

Die mindestens eine Luftleitschaufel kann eine Fläche aufweisen, die einen Winkel zur Ebene der Kupplungsscheibe zwischen 10° und 80° einschließt. Der Winkel liegt besonders bevorzugt zwischen 25° und 65°.

Die mindestens eine Luftleitschaufel erhebt sich bevorzugt um mindestens 3 mm aus der Ebene der Kupplungsscheibe in axiale Richtung, besonders bevorzugt um mindestens 5 mm. Damit wird ein hinreichender Strömungseffekt erzielt.

Die Luftleitschaufel kann in verschiedener Weise ausgeführt sein. Eine erste Möglichkeit besteht darin, dass sie eine im wesentlichen ebene Fläche aufweist. Sie kann auch eine gewölbte Fläche, mindestens zwei hohlzylindrisch ausgebildete, zusammengesetzte Abschnitte oder einen splineförmig gebogenen Abschnitt aufweisen.

Bevorzugt ist weiter vorgesehen, dass die Luftleitschaufel an dem axial am weitesten von der Ebene der Kupplungsscheibe entfernten Bereich endet. Dies ist jedoch nicht zwingend. Es kann alternativ auch vorgesehen sein, dass die Luftleitschaufel ganz oder teilweise wieder nach ihrem axial am weitesten von der Ebene der Kupplungsscheibe entfernten Punkt in die Ebene der Kupplungsscheibe zurückgeführt wird.

Die Luftleitschaufel besteht nach einer fertigungstechnisch einfachen und kostengünstigen Variante aus dem Material der Kupplungsscheibe und ist aus der Ebene der Kupplungsscheibe heraus gebogen. Hiernach werden vorzugsweise Ausstanzungen der Form vorgenommen, wie sie benötigt werden, um anschließend Blechstreifen, die die Schaufeln bilden sollen, aus der Ebene der Kupplungsscheibe heraus zu biegen.

Es kann gemäß einer alternativen Lösung aber auch vorgesehen werden, dass die mindestens eine Luftleitschaufel ein separates Teil ist, das an der Kupplungsscheibe befestigt ist. In diesem Falle kann vorgesehen werden, dass die mindestens eine Luftleitschaufel mit der Kupplungsscheibe vernietet ist. Die Nietverbindung zwischen der mindestens einen Luftleitschaufel und der Kupplungsscheibe kann dabei auch ein weiteres Funktionselement der Kupplungsscheibe festlegen.

Eine alternative Lösungsmöglichkeit besteht darin, dass die mindestens eine Luftleitschaufel mit der Kupplungsscheibe mittels einer Clip-Verbindung verbunden ist. Hiernach werden die Luftleitschaufeln also separat gefertigt und dann in Ausnehmungen (Ausstanzungen) in der Kupplungsscheibe mittels einer Schnappverbindung eingesetzt.

Mit der vorgeschlagenen Lösung wird eine Kupplungsvorrichtung - allgemein gesprochen: eine Drehmomentübertragungsvorrichtung - geschaffen, die die Eigenschaft aufweist, dass durch die als "Spoiler" wirkenden Luftleitschaufeln eine Axialkraft auf die Kupplungsscheibe erzeugt wird, die das Betriebsverhalten der Vorrichtung verbessert, wenn nämlich bei Drehung der Kupplungsscheibe in Folge der Luftstromumleitung Kraftkomponenten entstehen, die hier gezielt genutzt werden. Es wird also erfindungsgemäß dafür gesorgt, dass die Kupplungsscheibe sich von der Schwungradreibfläche entlang ihres Gleitsitzes auf der Getriebeeingangswelle hinweg bewegt. Es wird hierdurch erreicht, dass bei Beginn des Auskuppeln, wenn die Anpressplatte von den Reibbelägen abhebt, die Kupplungsscheibe unverzüglich selbst sich in Richtung der Anpressplatte mitbewegt; die Kupplungsscheibe hebt also mit ihrem Reibbelag von der Gegenreibfläche am Schwungrad ab. Die Kupplung trennt daher sehr schnell, und die Drehmomentübertragung endet in vorteilhafter Weise gleichzeitig mit der Betätigung der Anpressplatte. Ein "Haftenbleiben" des Reibbelags an der Reibfläche des Schwungrades wird vermieden, es tritt beim Auskuppeln kein "Rupfen" auf.

Die Luftleitschaufeln haben auch den Nebeneffekt eines nach außen gerichteten Luftstroms, der sich zwischen der Schwungradreibfläche und dem Kupplungsbelag hindurch "zwängt". Hierdurch werden die betroffenen Reibflächen gekühlt, was besonders dann von Interesse ist, wenn ein mehrmaliges hintereinander erfolgendes Anfahren stattfindet.

Die durch die Luftleitschaufeln erzeugte Axialkraftkomponente ist relativ klein im Verhältnis zu der auf die Anpressplatte einwirkenden Anpresskraft und beeinflusst die Drehmomentübertragungsfähigkeit der eingekuppelten Reibungskupplung nicht. Das Trennverhalten wird jedoch positiv beeinflusst, insbesondere bei Schaltvorgängen bei hoher Drehzahl, vor allem wenn Unwuchten in der Kupplungsscheibe die Reibung zwischen der Getriebeeingangswelle und der Kupplungsscheibennabe groß werden lassen.

In der Zeichnung sind Ausführungsbeispiele der Erfindung dargestellt. Es zeigen:
- Fig. 1: den Radialschnitt durch eine Kraftfahrzeugkupplungseinrichtung gemäß dem Stand der Technik,
- Fig. 2a: den Radialschnitt durch eine erfindungsgemäße Ausführungsform einer Kraftfahrzeugkupplungseinrichtung bei geschlossener Kupplung,
- Fig. 2b: den Radialschnitt durch die Kraftfahrzeugkupplungseinrichtung gemäß Fig. 2a bei offener Kupplung,
- Fig. 3: die Ansicht A gemäß Fig. 2b mit teilweise geschnittener Darstellung,
- Fig. 4: eine erfindungsgemäße Kupplungsscheibe (ohne Reibbeläge) in der Vorderansicht,
- Fig. 5: den Schnitt A-A gemäß Fig. 4,
- Fig. 6: den Schnitt B-B gemäß Fig. 4,
- Fig. 7: eine alternative Ausgestaltung einer erfindungsgemäßen Kupplungsscheibe (ohne Reibbeläge) in der Vorderansicht,
- Fig. 8: den Schnitt A'-A' gemäß Fig. 7,
- Fig. 9: den Schnitt B'-B' gemäß Fig. 7,
- Fig. 10: eine alternative Ausgestaltung einer erfindungsgemäßen Kupplungsscheibe (mit Reibbelägen) inder Vorderansicht,
- Fig. 11: den Schnitt A"-A" gemäß Fig. 10,
- Fig. 12: die Kupplungsscheibe nach Fig. 10 in perspektivischer Ansicht,
- Fig. 13: ein Ausgangsblech einer Luftleitschaufel vor ihrer Umformung in der Vorderansicht,
- Fig. 14: die Luftleitschaufel nach Fig. 13 nach ihrer Umformung in der Vorderansicht,
- Fig. 15: die Luftleitschaufel nach Fig. 14 in der Seitenansicht,
- Fig. 16: einen Schnitt durch eine Kupplungsscheibe in Höhe der Luftleitschaufel, aus radialer Richtung gesehen, und
- Fig. 17: einen Schnitt durch eine Kupplungsscheibe in Höhe der Luftleitschaufel, aus radialer Richtung gesehen, gemäß einer zu Fig. 16 alternativen Ausgestaltung.

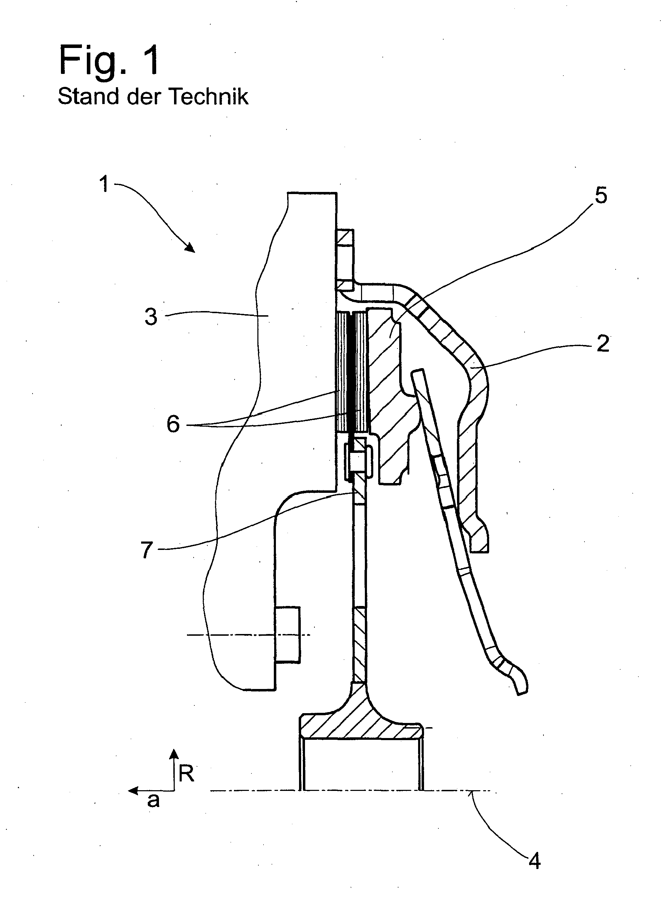

In Fig. 1 ist eine Kupplungsvorrichtung 1 nach dem Stand der Technik zu sehen, die in üblicher Weise aufgebaut ist. Ein Kupplungsgehäuse 2 ist mit einem Schwungrad 3 einer Brennkraftmaschine drehfest verbunden, wobei Gehäuse 2 samt Schwungrad 3 um eine Drehachse 4 rotieren können. In dem Gehäuse 2 ist eine Anpressplatte 5 angeordnet, die drehfest zum Gehäuse 2, jedoch axial verschieblich gelagert ist. Zwischen der Anpressplatte 5 und dem Schwungrad 3 ist eine Kupplungsscheibe 7 angeordnet, die beidseitig mit je einem Reibbelag 6 versehen ist.

Wird die Anpressplatte 5 axial in Richtung Schwungrad 3 gedrückt, kommt es aufgrund des Reibschlusses zwischen Reibbelag 6 und Schwungrad 3 bzw. zwischen Reibbelag 6 und Anpressplatte 5 zur Übertragung eines Drehmoments vom Schwungrad 3 zur Kupplungsscheibe 7, die - was nicht dargestellt ist - mit einer Getriebewelle drehfest verbunden ist.

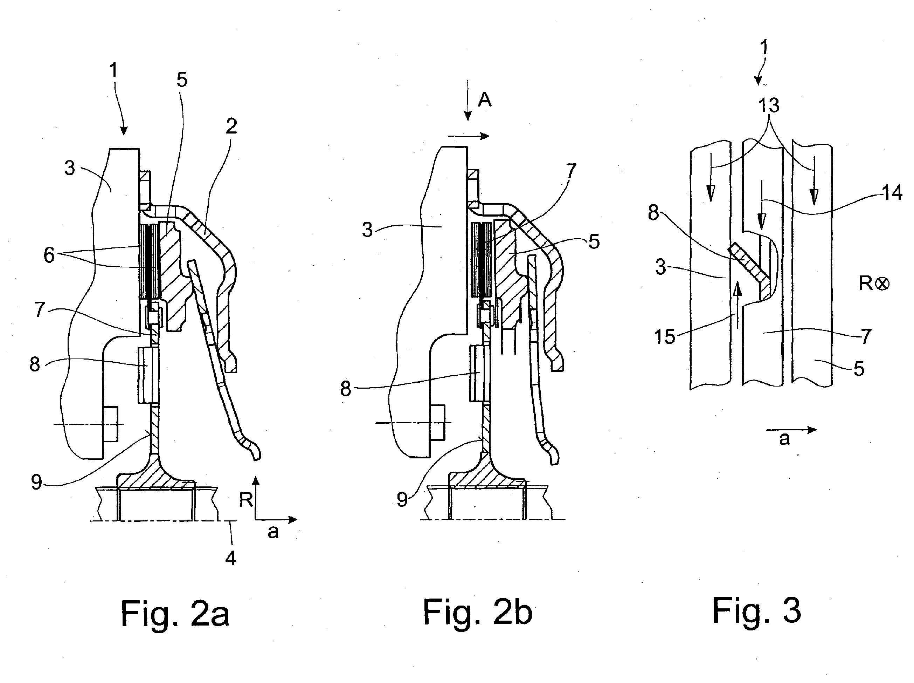

Gemäß einer Ausführungsform der Erfindung ist die Kupplungsscheibe 7 mit einer Anzahl von Luftleitschaufeln 8 versehen. In Fig. 2a, 2b und 3 ist die Kupplungsvorrichtung 1 und ihre Wirkungsweise nochmals dargestellt, wobei auch die Lage der Luftleitschaufeln 8 zu sehen ist. Diese ragen in axiale Richtung a in Richtung auf das Schwungrad 3 aus der Ebene 9 der Kupplungsscheibe 7 heraus. Beim Lüften der Kupplung verfährt die Anpressplatte 5 in Fig. 2b nach rechts, wodurch die Kupplungsscheibe 7 sich mit ihren Reibbelägen 6 von den Reibflächen am Schwungrad 3 und an der Anpressplatte 5 lösen kann. Während Fig. 2a den geschlossenen Zustand der Kupplung zeigt, ist in Fig. 2b der geöffnete, betätigte Zustand skizziert. Die Darstellung gemäß Fig. 3 zeigt die Ansicht A nach Fig. 2b, d. h. in radiale Richtung R betrachtet. Zu erkennen ist die Bewegungsrichtung 13 des Schwungrades 3 und der Anpressplatte 5 sowie die - gleichsinnige - Bewegungsrichtung 14 der Kupplungsscheibe 7. Infolge der Luftleitschaufel 8 (s. Fig. 3) wird eine Luftwiderstandskraft 15 hervorgerufen, die infolge der Luftumleitung zur Folge hat, dass eine strömungsbedingte Kraft in axiale Richtung a auftritt, die das Lösen der Kupplung begünstigt.

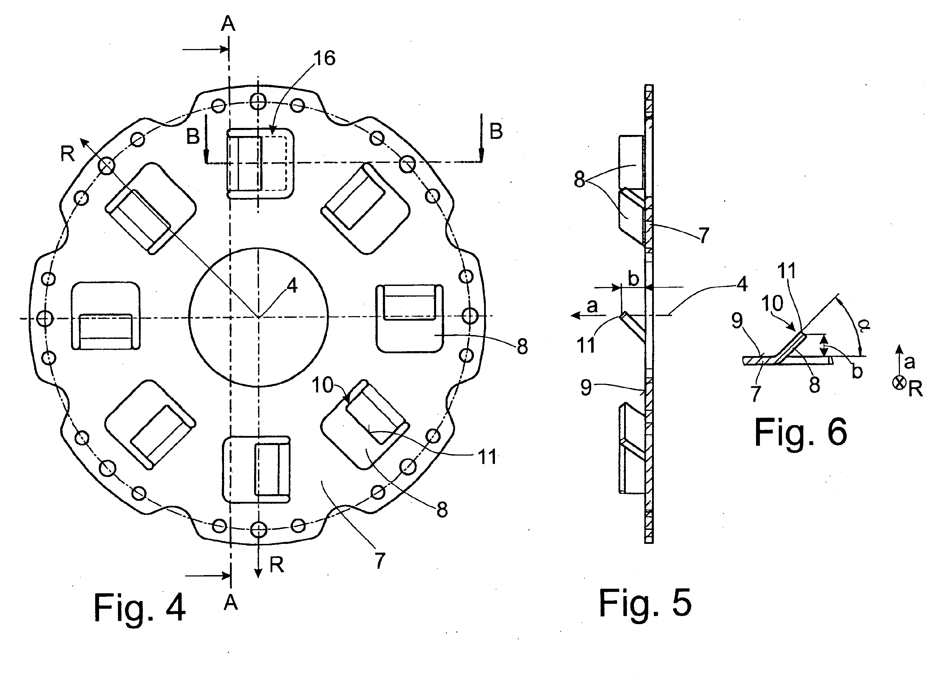

Eine konkrete Ausgestaltung der erfindungsgemäßen Kupplungsscheibe ist in den Figuren 4, 5 und 6 dargestellt. In Fig. 4 ist das Grundblech der Kupplungsscheibe 7 zu sehen, wobei die am äußeren radialen Bereich des Teils befestigten Reibbeläge samt Trägerelement nicht dargestellt sind. Die in Fig. 4 dargestellte Kupplungsscheibe 7 weist acht über den Umfang gleichmäßig beabstandet angeordnete Luftleitschaufeln 8 auf, wobei diese durch Herausbiegen eines Teils des Materials der Kupplungsscheibe 7 ausgebildet sind. Hierzu sind Einstanzungen in die Kupplungsscheibe 7 eingebracht worden, wobei die in Fig. 4 oben mit gestrichelten Linien dargestellt Kontur 16 eingestanzt wurde. Der sich ergebende freigestanzte Streifen wurde dann in die insbesondere in Fig. 6 dargestellt Lage herausgebogen, so dass sich die hier als ebene Fläche ausgebildete Luftleitschaufel 8 unter einem Winkel α gegen die Ebene 9 der Kupplungsscheibe 7 erhebt. Dabei kommt das axiale Ende 10 der Luftleitschaufel 8 in einem Abstand b zur Ebene 9 der Kupplungsscheibe 7 zu liegen.

Wie weiter zu sehen ist, endet die Luftleitschaufel 8 in dem besagten axialen Ende 10, der vorliegend eine Kante 11 bildet, die im wesentlichen in radiale Richtung R weist (s. Fig. 4). Hierdurch wird ein maximaler Strömungseffekt erzeugt, der die Kupplungsscheibe 7 in axiale Richtung a drückt.

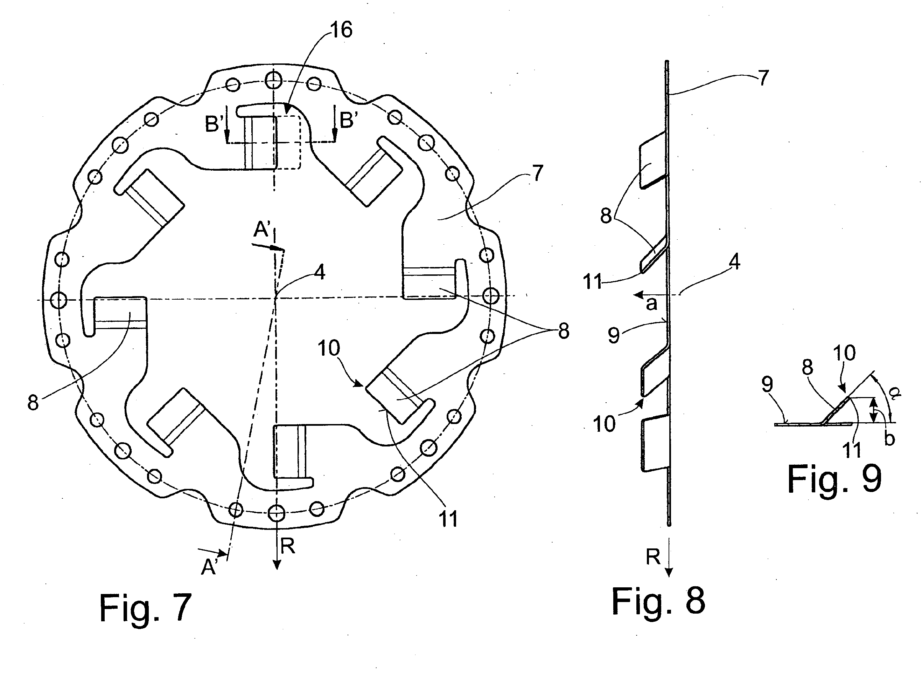

In den Figuren 7, 8 und 9 ist eine alternative Ausgestaltung der Kupplungsscheibe 7 zu sehen. Das hier dargestellte Bauteil ist ein separates, einteiliges Bauteil, das mit der Kupplungsscheibe 7 vernietet wird. Auch hier ist die Kontur 16 des ausgestanzten, jedoch noch nicht aus der Ebene 9 der Kupplungsscheibe 7 herausgebogenen Blechs dargestellt, das dann zur Luftleitschaufel 8 umgebogen wird. Auch hier ist gut zu erkennen, dass die Kante 11 am axialen Ende 10 der Luftleitschaufel 8 in radiale Richtung R weist (s. Fig. 7).

Grundsätzlich möglich wäre es freilich auch, durch Ausbeulen des Blechs der Kupplungsscheibe 7 die gewünschten Luftleitschaufeln 8 auszuformen.

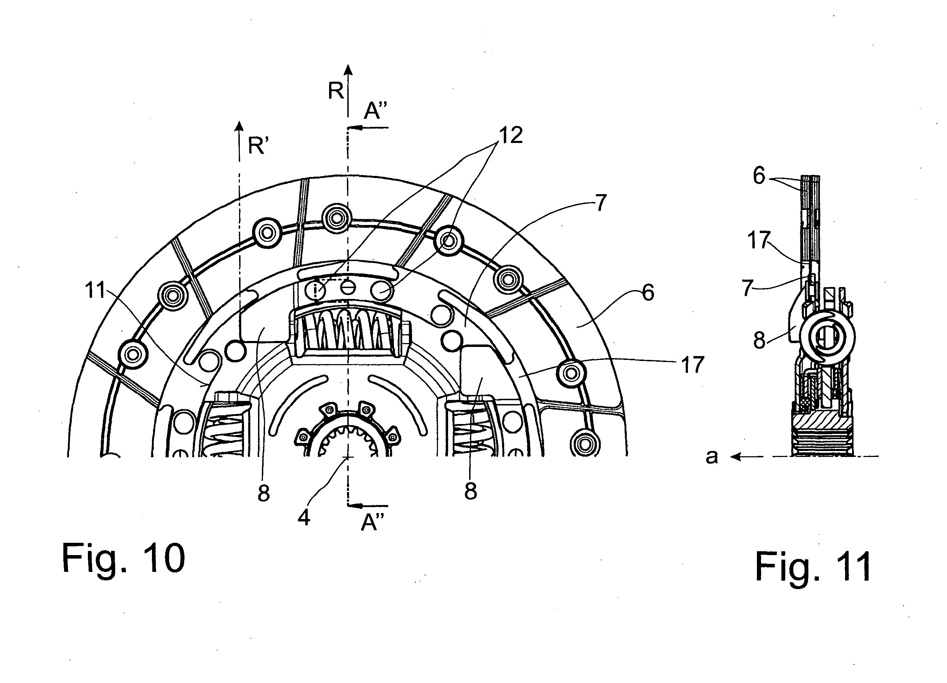

In den Figuren 10 bis 1 5 ist eine weitere alternative Ausgestaltung der Erfindung zu sehen. Hier sind die Luftleitschaufeln 8 nicht aus dem Material der Kupplungsscheibe 7 gebildet, sondern sie sind als separate Teile ausgeführt, die mit der Kupplungsscheibe 7 verbunden werden. In Fig. 10, 11 und 12 ist zu sehen, wie vier Luftleitschaufeln 8 über den Umfang der Kupplungsscheibe 7 verteilt angeordnet sind, wobei diese mittels einer Nietverbindung 12 am Blech der Kupplungsscheibe 7 fixiert sind.

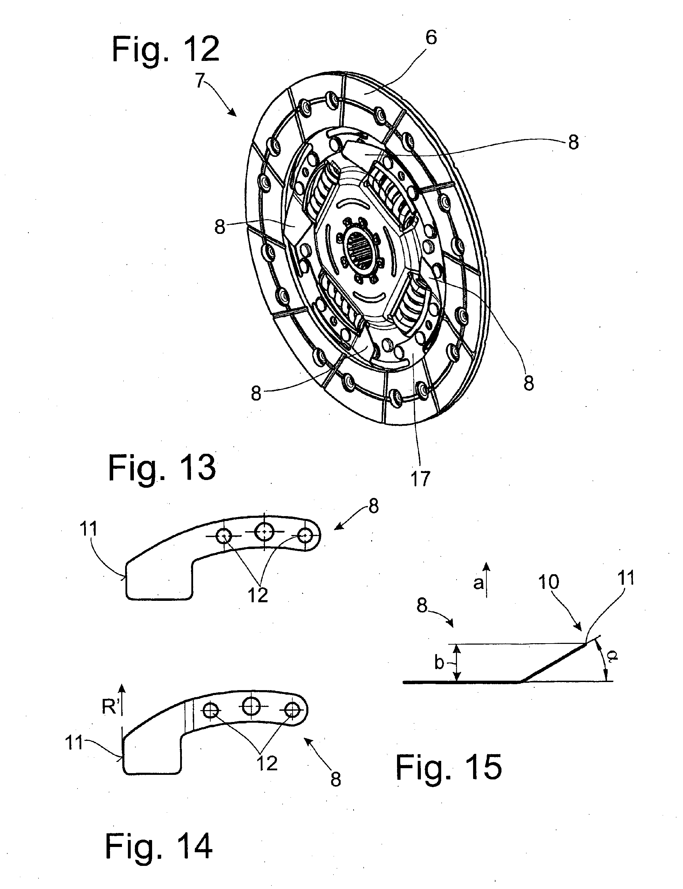

Die Figur 13 zeigt ein ebenes ausgestanztes Blech, das zur Luftleitschaufel 8 umgeformt wird, s. Fig. 14, indem der flügelartige Endbereich aus der Ebene des ausgestanzten Blechs heraus- oder hochgebogen wird. Dies ist in Fig. 15 zu sehen. Der flügelartige Endbereich erstreckt sich, eben ausgebildet, bis zu seinem axialen Ende 10, der wieder eine Kante 11 bildet, um einen Abstand b aus der Grundfläche des Teils heraus.

In Fig. 10 ist zu erkennen, dass die Kante 11 sich vorliegend in eine Richtung R' parallel zur radialen Richtung R erstreckt.

Die Nietverbindungen 12 können genutzt werden, um gleichzeitig das Trägerblech 17 für die Reibbeläge 6 mit dem Grundblech der Kupplungsscheibe 7 zu verbinden, wie es in Fig. 12 zu sehen ist.

Mit dem erfindungsgemäßen Vorschlag wird ein schneller und sicherer Freigang der Kupplungsscheibe 7 insbesondere bei kritischen Kupplungsvorrichtungen gesorgt, die zu Trennproblemen neigen.

Die Luftleitschaufeln 8 können bei bestehenden Elementen einer Drehmomentübertragungseinrichtung integriert, angeformt bzw. ausgeformt sein, z. B. bei einer Kupplungsscheibe in einem oder in beiden Deckblechen oder in der Belagfeder. Hierbei kann die Belagfeder ein einteiliges Bauteil sein oder sie kann aus einzelnen, am Umfang verteilten Belagfedersegmenten bestehen; von diesen Belagfedersegmenten können auch nur ein Teil Luftleitschaufeln aufweisen. Es ist auch möglich, Luftleitschaufeln 8 an Belag-Trägerblechen anzubringen, auf denen die Beläge aufgeklebt bzw. angebracht sind. Hierzu müssten die Luftleitschaufeln an Vorsprüngen außerhalb des Außendurchmessers oder innerhalb des Innendurchmessers der Reibbeläge angeordnet sein.

Besonders vorteilhaft kann es sein, die Luftleitschaufeln 8 als Formteil aus Kunststoff zu fertigen, das dann in entsprechende Ausnehmungen bzw. Öffnungen in der Kupplungsscheibe eingebracht (z. B. eingeclipst) wird, um es mit der Kupplungsscheibe 7 zu verbinden.

Wenngleich oben von Luftleitschaufeln 8 gesprochen wurde, kommt das erfindungsgemäße Konzept natürlich genauso zur Anwendung, wenn sich ein anderes Medium als Luft in der Kupplungsvorrichtung befindet. Im Gegenteil wird der gewünschte Effekt der Erzeugung einer Axialkraft umso stärker, je höher die Dichte des Umgebungsmediums ist. Die Erfindung schließt daher natürlich auch derartige Anwendungen mit ein.

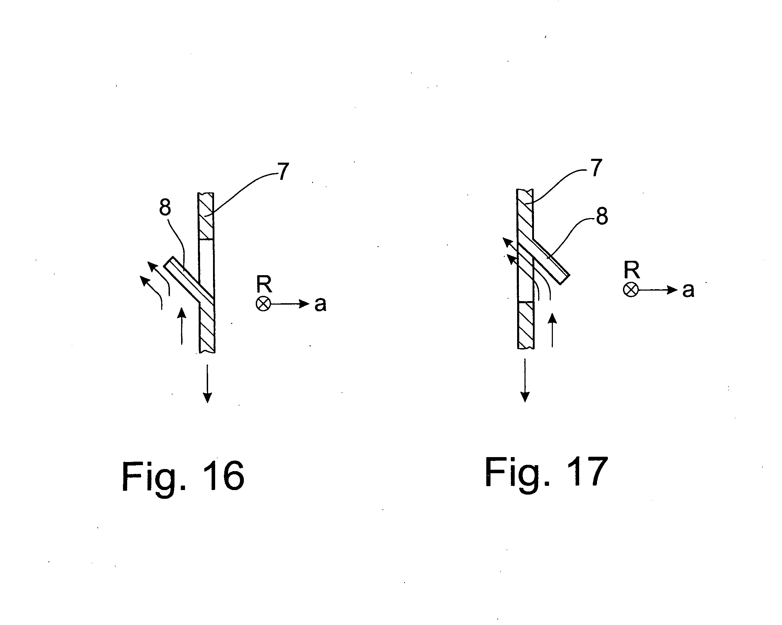

Zur weiteren Illustration sei noch auf die Figuren 16 und 17 hingewiesen. Hier sind zwei Schnitte durch die Kupplungsscheibe 7 mit aus dem Material der Kupplungsscheibe 7 ausgeformten Luftleitschaufeln 8 zu sehen. Der nach unten gerichtete Pfeil gibt jeweils die Drehrichtung der Kupplungsscheibe 7 an. Der dieser Richtung entgegen gerichtete Pfeil gibt den Luftwiderstand an; die gebogenen Pfeile geben demgemäß den Verlauf der Luftströmung an. Durch die Luftumlenkung wird in beiden Fällen eine nach rechts gerichtete Kraft auf die Kupplungsscheibe 7 ausgeübt, wenngleich die Luftleitschaufeln 8 einmal in Richtung Schwungrad und einmal in Richtung Druckplatte gerichtet sind. Möglich wird eine solche Ausgestaltung beispielsweise bei starrer Kupplungsscheibe; die Luft strömt hier durch das Blech der Kupplungsscheibe hindurch (es gibt keine benachbarten Bauteile).

Wenngleich eine bevorzugte Ausbildung vorsieht, dass die Luftleitschaufeln 8 an dem von der Ebene 9 der Kupplungsscheibe 7 am weitesten entfernten Ende 10 eine Kante oder Linie 11 bilden, ist dies keineswegs zwingend. Es kann auch vorgesehen sein, dass die Luftleitschaufel 8 an ihrem von der Ebene 9 der Kupplungsscheibe 7 axial am weitesten entfernten Ende spitz oder gerundet zuläuft, so dass an ihrem höchsten (axial am weitesten entfernten Punkt) keine Linie definiert ist. Die Luftleitschaufel 8 kann auch kurz vor dem Erreichen ihres axial am weitesten von der Ebene 9 entfernten Endes nochmals gegengebogen sein.

Bei beispielsweise per Clipverbindung an der Kupplungsscheibe 7 angeordneten Luftleitschaufeln 8 können diese aufgrund der größeren Gestaltungsmöglichkeiten der Schaufeln ebenfalls am axial äußersten Ende eine Linie bzw. Kante aufweisen, die nicht zwingend in radiale Richtung R oder parallel dazu (R') verläuft.

### Bezugszeichenliste

- 1: Kupplungsvorrichtung
- 2: Kupplungsgehäuse
- 3: Schwungrad
- 4: Drehachse
- 5: Anpressplatte
- 6: Reibbelag
- 7: Kupplungsscheibe
- 8: Leitschaufel (Luftleitschaufel)
- 9: Ebene der Kupplungsscheibe
- 10: axiales Ende der Luftleitschaufel
- 11: Kante
- 12: Nietverbindung
- 13: Bewegungsrichtung
- 14: Bewegungsrichtung
- 15: Luftwiderstandskraft
- 16: Kontur
- 17: Trägerblech

- a: axiale Richtung
- R: radiale Richtung
- R': zur radialen Richtung parallele Richtung
- α: Winkel
- b: Abstand

## Patentansprüche

1. Kupplungsvorrichtung (1), insbesondere Kraftfahrzeugkupplungsvorrichtung, die ein Kupplungsgehäuse (2) aufweist, das mit einem Schwungrad (3) einer Brennkraftmaschine verbunden ist und mit diesem um eine Drehachse (4) rotieren kann, sowie eine im Kupplungsgehäuse (2) drehfest, jedoch axial verschiebbar angeordnete Anpressplatte (5) und eine zwischen dem Schwungrad (3) und der Anpressplatte (5) angeordnete und mit mindestens einem Reibbelag (6) versehene Kupplungsscheibe (7),
**dadurch gekennzeichnet,**
**dass** die Kupplungsscheibe (7) zur strömungsbedingten Erzeugung einer Kraft in axiale Richtung (a) mindestens eine Leitschaufel (8) aufweist, die sich aus der Ebene (9) der Kupplungsscheibe (7) heraus in axiale Richtung (a) erstreckt, wobei die Leitschaufel (8) mindestens einen Abschnitt aufweist, der unter einem Winkel (α) zur Ebene (9) der Kupplungsscheibe (7) angeordnet ist.

2. Kupplungsscheibe nach Anspruch 1, **dadurch gekennzeichnet, dass** der Schnitt der Leitschaufel (8) mit einer parallel zur Ebene (9) der Kupplungsscheibe (7) verlaufenden Ebene eine Linie bildet, die zumindest teilweise, vorzugsweise vollständig in radiale Richtung (R) der Kupplungsscheibe (7) oder in eine zur radialen Richtung (R) parallele Richtung (R') weist.

3. Kupplungsvorrichtung nach Anspruch 1 oder 2, **dadurch gekennzeichnet, dass** das von der Kupplungsscheibe (7) axial am weitesten entfernte Ende (10) der Leitschaufel (8) eine Kante (11) oder eine Linie bildet, die, in axiale Richtung (a) betrachtet, in radiale Richtung (R) der Kupplungsscheibe (7) oder in eine zur radialen Richtung (R) parallele Richtung (R') weist.

4. Kupplungsvorrichtung nach einem der Ansprüche 1 bis 3, **dadurch gekennzeichnet, dass** über den Umfang der Kupplungsscheibe (7) mehrere Leitschaufeln (8) angeordnet sind.

5. Kupplungsvorrichtung nach Anspruch 4, **dadurch gekennzeichnet, dass** die Leitschaufeln (8) äquidistant über den Umfang verteilt angeordnet sind.

6. Kupplungsvorrichtung nach einem der Ansprüche 1 bis 5, **dadurch gekennzeichnet, dass** die mindestens eine Leitschaufel (8) in axiale Richtung (a) auf das Schwungrad (3) zu gerichtet ist.

7. Kupplungsvorrichtung nach einem der Ansprüche 1 bis 6, **dadurch gekennzeichnet, dass** die mindestens eine Leitschaufel (8) in axiale Richtung (a) auf die Anpressplatte (5) zu gerichtet ist.

8. Kupplungsvorrichtung nach einem der Ansprüche 1 bis 7, **dadurch gekennzeichnet, dass** die mindestens eine Leitschaufel (8) eine Fläche aufweist, die einen Winkel (α) zur Ebene (9) der Kupplungsscheibe (7) zwischen 10° und 80° einschließt.

9. Kupplungsvorrichtung nach Anspruch 8, **dadurch gekennzeichnet, dass** der Winkel (α) zwischen 25° und 65° beträgt.

10. Kupplungsvorrichtung nach einem der Ansprüche 1 bis 9, **dadurch gekennzeichnet, dass** sich die mindestens eine Leitschaufel (8) aus der Ebene (9) der Kupplungsscheibe (7) um mindestens 3 mm erhebt.

11. Kupplungsvorrichtung nach Anspruch 10, **dadurch gekennzeichnet, dass** sich die mindestens eine Leitschaufel (8) aus der Ebene (9) der Kupplungsscheibe (7) um mindestens 5 mm erhebt.

12. Kupplungsvorrichtung nach einem der Ansprüche 1 bis 11, **dadurch gekennzeichnet, dass** die mindestens eine Leitschaufel (8) im wesentlichen eine ebene Fläche bildet.

13. Kupplungsvorrichtung nach einem der Ansprüche 1 bis 11, **dadurch gekennzeichnet, dass** die mindestens eine Leitschaufel (8) eine gewölbte Fläche bildet.

14. Kupplungsvorrichtung nach einem der Ansprüche 1 bis 11, **dadurch gekennzeichnet, dass** die mindestens eine Leitschaufel (8) mindestens zwei hohlzylindrisch ausgebildete, zusammengesetzte Abschnitte aufweist.

15. Kupplungsvorrichtung nach einem der Ansprüche 1 bis 11, **dadurch gekennzeichnet, dass** die mindestens eine Leitschaufel (8) einen splineförmig gebogenen Abschnitt aufweist.

16. Kupplungsvorrichtung nach einem der Ansprüche 1 bis 15, **dadurch gekennzeichnet, dass** die mindestens eine Leitschaufel (8) an dem axial am weitesten von der Ebene (9) der Kupplungsscheibe (7) entfernten Bereich endet.

17. Kupplungsvorrichtung nach einem der Ansprüche 1 bis 16, **dadurch gekennzeichnet, dass** die mindestens eine Leitschaufel (8) aus dem Material der Kupplungsscheibe (7) besteht und aus der Ebene (9) der Kupplungsscheibe (7) heraus gebogen ist.

18. Kupplungsvorrichtung nach Anspruch 17, **dadurch gekennzeichnet, dass** Linie der Biegung, entlang der die Leitschaufel (8) aus der Ebene (9) der Kupplungsscheibe (7) heraus gebogen ist, in axiale Richtung (a) betrachtet, in radiale Richtung (R) der Kupplungsscheibe (7) oder in eine zur radialen Richtung (R) parallele Richtung (R') weist.

19. Kupplungsvorrichtung nach einem der Ansprüche 1 bis 17, **dadurch gekennzeichnet, dass** die mindestens eine Leitschaufel (8) ein separates Teil ist, das an der Kupplungsscheibe (7) befestigt ist.

20. Kupplungsvorrichtung nach Anspruch 19, **dadurch gekennzeichnet, dass** die mindestens eine Leitschaufel (8) mit der Kupplungsscheibe (7) vernietet ist.

21. Kupplungsvorrichtung nach Anspruch 20, **dadurch gekennzeichnet, dass** die Nietverbindung (12) zwischen der mindestens einen Leitschaufel (8) und der Kupplungsscheibe (7) ein weiteres Funktionselement der Kupplungsscheibe (7) festlegt.

22. Kupplungsvorrichtung nach Anspruch 19, **dadurch gekennzeichnet, dass** die mindestens eine Leitschaufel (8) mit der Kupplungsscheibe (7) mittels einer Clip-Verbindung verbunden ist.

23. Kupplungsvorrichtung nach einem der Ansprüche 1 bis 22, **dadurch gekennzeichnet, dass** die mindestens eine Leitschaufel (8) eine Luftleitschaufel ist.
